# EUROPÄISCHE PATENTSCHRIFT

(11) **EP 2 245 469 B1**
(45) Veröffentlichungstag und Bekanntmachung des Hinweises auf die Patenterteilung: **20.07.2011**
(21) Anmeldenummer: 09710422.8
(22) Anmeldetag: 11.02.2009
(51) Int. Cl.: G01P 3/488, G01D 5/20, G08C 17/00

(54) **MESSVORRICHTUNG ZUR MESSUNG VON RELATIVEN DREHGESCHWINDIGKEITEN MIT DRAHTLOSER SIGNALÜBERTRAGUNG**
MEASURING DEVICE FOR MEASURING RELATIVE ROTATIONAL SPEEDS USING WIRELESS SIGNAL TRANSFER
DISPOSITIF DE MESURE POUR MESURER LES VITESSES DE ROTATION RELATIVE PAR TRANSMISSION SANS FIL DU SIGNAL

(30) Priorität: 12.02.2008 DE 102008008720
(43) Veröffentlichungstag der Anmeldung: 03.11.2010
(73) Patentinhaber: KNORR-BREMSE Systeme für Nutzfahrzeuge GmbH, 80809 München (DE)
(72) Erfinder: WINDMÜLLER, Tobias, 80807 München (DE); SCHLEYER, Mathias, 87435 Kempten (DE)
(74) Vertreter: Schönmann, Kurt
(86) Internationale Anmeldenummer: PCT/EP2009/000940
(87) Internationale Veröffentlichungsnummer: WO 2009/100885

(56) Entgegenhaltungen:
- EP-A- 1 624 206
- WO-A-2004/044593
- WO-A-2008/153899
- DE-A1- 10 011 820
- JP-A- 2003 120 702
- US-A- 4 688 951
- US-A1- 2004 150 516
- US-A1- 2005 150 281

## Beschreibung

### Stand der Technik

Die Erfindung betrifft eine Messvorrichtung zur Messung der relativen Drehgeschwindigkeit eines sich gegenüber einem Stator drehenden Rotors, gemäß dem Oberbegriff von Anspruch 1.

Ein induktiver Impulsgeber ist beispielsweise aus dem Kraftfahrtechnischen Taschenbuch, Robert Bosch GmbH, Seiten 136 bis 139, Friedrich Vieweg & Sohn Verlag, 26.Auflage Januar 2007 bekannt. Bei einer solchen inkrementalen Erfassung der relativen Drehgeschwindigkeit trägt das sich drehende Element oder der Rotor eine Anzahl von Umfangsmarkierungen, meist in Form von Zähnen eines Zahnrads, wobei jeder Zahn eine Spannungsänderung der in der vom Stator getragenen Induktionsspule induzierten Spannung hervorruft. Aus der Anzahl der je Zeiteinheit abgetasteten Umfangsmarkierungen berechnet dann eine Auswerteelektronik die relative Drehgeschwindigkeit des Rotors relativ zum Stator. Dabei kann der Rotor aus magnetisch passivem Material bestehen, wie beispielsweise aus weichmagnetischem Eisen. In diesem Fall ist die Induktionsspule des Stators um einen Polstift gewickelt, an dem ein Magnet aus hartmagnetischem Material befestigt ist. Alternativ kann der Rotor auch aus hartmagnetischem Material bestehen, wobei die einzelnen Zähne des Zahnrads beispielsweise eine abwechselnde magnetische Polarität aufweisen.

Den bekannten induktiven Impulsgebern ist gemeinsam, dass sie durch wenigstens eine elektrische Signalleitung mit der meist in einem Steuergerät untergebrachten Auswerteeinrichtung verbunden sind. Bei modernen Fahrzeugen werden derartige Drehzahlsenoren beispielsweise zur Messung von Raddrehzahlen im Rahmen eines ABS-/ASR- oder ESP-Systems, von Kurbelwellen- und/oder Nockenwellendrehzahlen und/oder von Drehzahlen einer Einspritzpumpe eingesetzt und sind daher entsprechend zahlreich vorhanden, was eine entsprechende kostenintensive Verkabelung zur Verbindung der Drehzahlsensoren mit der jeweiligen Auswerteeinrichtung, beispielsweise mit einem ABS-Steuergerät erfordert.

Eine beispielsweise aus US 2005/150281 A1 oder US 2004/150516 A1 bekannte, gattungsgemäße Vorrichtung sieht eine von der auf der vom induktiven Impulsgeber induzierten Spannung basierenden elektrischen Energie versorgbare Sendeeinrichtung vor, welche ein Drehzahlmesssignal drahtlos an eine Empfangseinrichtung sendet. Die auf diese Weise erzeugte Energie ist jedoch begrenzt, so dass solche Sende-Empfangseinrichtungen eine relativ geringe Reichweite aufweisen, was vor allem bei Nutzfahrzeugen mit relativ großem Abstand der Messstellen wie beispielsweise Radlagern an der Hinterachse oder am Anhänger von der Empfangsstation im Führerhaus nachteilig ist.

### Aufgabe der Erfindung

Die Aufgabe der Erfindung besteht demgegenüber darin, eine drahtlose Messvorrichtung der eingangs erwähnten Art derart weiterzubilden, dass sie universeller einsetzbar ist.

Diese Aufgabe wird gemäß der Erfindung durch die Merkmale von Anspruch 1 gelöst.

### Offenbarung der Erfindung

Gemäß Anspruch 1 ist eine von der auf der vom induktiven Impulsgeber induzierten Spannung basierenden elektrischen Energie versorgbare Sendeeinrichtung vorgesehen, welche wenigstens das Drehzahlmesssignal oder ein aus diesem abgeleitetes Signal drahtlos an eine Empfangseinrichtung sendet.

Damit erfüllt die in der Induktionsspule des induktiven Impulsgebers induzierte Spannung eine Doppelfunktion, indem sie einerseits wenigstens das Drehzahlmesssignal beispielsweise als Signalfrequenz trägt und andererseits gleichzeitig die elektrische Energie für den Betrieb der Sendeeinrichtung zur drahtlosen Übertragung wenigstens des Drehzahlmesssignals oder des aus diesem abgeleiteten Signals an die Empfangseinrichtung liefert. Dieses aus dem Drehzahlmesssignal abgeleitete Signal kann beispielsweise das ausgewertete Drehzahlmesssignal sein, falls senderseitig bereits eine Auswerteeinrichtung für das Drehzahlmesssignal vorhanden ist, welche aus diesem die Ist-Drehgeschwindigkeit als fertige Eingangsgröße für ein Steuergerät generiert.

Wegen der drahtlosen Datenübertragung der Messsignale von der Sendeeinrichtung auf die Empfangseinrichtung kann daher die eine Verkabelung zwischen dem induktiven Impulsgeber und der Zieleinrichtung der Messsignale, beispielsweise ein ABS-, ASR, ESP- oder Motorsteuergerät, entfallen, wodurch die Montagekosten für die erfindungsgemäße Messeinrichtung vorteilhaft niedrig sind.

Erfindungsgemäß sind die Sendeeinrichtung und die Empfangseinrichtung von einem RFID-System mit aktivem Transponder umfasst, wobei ein Energiespeicher des Transponders von der induzierten Spannung der Induktionsspule des induktiven Impulsgebers gespeist wird.

Ein solcher Transponder besteht aus einem Mikrochip, einer Antenne, einem Träger oder Gehäuse und einer Energiequelle, welche bei passiven Transpondern durch einen Kondensator gebildet wird.

Ein beispielsweise aus der DE 10 2006 011 361 A1 im Zusammenhang mit einem Umdrehungszähler bekannter passiver Transponder eines Radio Frequency-Identifikation-Systems (RFID) benötigt zur Funktionsausübung keine eigene Stromversorgung. Vielmehr erzeugt das Lesegerät des RFID-Systems, hier die Empfangseinrichtung ein hochfrequentes elektromagnetisches Wechselfeld, welches die Antenne des RFID-Transponders beleuchtet. In einer Antennenspule des Transponders entsteht, sobald diese vom elektromagnetischen Feld des Lesegeräts erfasst wird, ein Induktionsstrom. Dieser Induktionsstrom wird gleichgerichtet und damit ein Kondensator als Kurzzeitspeicher aufgeladen, welcher für den Lesevorgang die Stromversorgung eines Mikrochips übernimmt. Der so aktivierte Mikrochip im Transponder empfängt Befehle vom Lesegerät (Empfangseinrichtung), welches dieses in sein elektromagnetisches Feld moduliert. Der Mikrochip erzeugt eine Antwort und moduliert durch Feldschwächung im kontaktfreien Kurzschluss oder per Reflexion das vom Lesegerät (Empfangseinrichtung) ausgesendete Feld.

Passive Transponder beziehen folglich ihre Energie zur Versorgung des Mikrochips aus den empfangenen elektromagnetischen Wellen (Continuous Wave) des Lesegeräts (Empfangseinrichtung). Mit der Antennenspule wird durch die Induktion ähnlich wie in einem Transformator der Kondensator aufgeladen, welcher den Mikrochip mit elektrischer Energie versorgt. Die Continuous Wave muss aufgrund der geringen Kapazität des Kondensators vom Lesegerät (Empfangseinrichtung) durchgehend gesendet werden, während sich der Transponder im Lese- oder Beleuchtungsbereich befindet. Die Reichweite beträgt wenige Millimeter bis zu einigen Zentimetern, weshalb der Abstand zwischen der kombinierten Sensor-Sende-Baueinheit beinhaltend einen solchen passiven Transponder und den induktiven Impulsgeber einerseits und dem Lesegerät (Empfangseinrichtung) andererseits relativ gering und die Ersparnis an Verkabelung daher nicht sehr groß ist.

Demgegenüber haben die erfindungsgemäß verwendeten aktiven RFID-Transponder eine deutlich höhere Reichweite, die etwa bis 100 Meter betragen kann, weil sie die Energie zur Versorgung des Mikrochips aus einem eigenen Energiespeicher beziehen. Dieser Energiespeicher wird dann von der induzierten Spannung der Induktionsspule des induktiven Impulsgebers gespeist. In diesem Fall kann daher wegen der relativ großen drahtlos überbrückbaren Reichweite der Abstand zwischen der kombinierten Sensor-Sende-Baueinheit und dem Lesegerät (Empfangseinrichtung) wesentlich größer ausfallen, weshalb mit einer solchen Lösung wesentlich größere Kabellängen eingespart werden können.

Durch die in den Unteransprüchen aufgeführten Maßnahmen sind vorteilhafte Weiterbildungen und Verbesserungen der im Anspruch 1 angegebenen Erfindung möglich.

Besonders bevorzugt beinhaltet ist der mittels der induzierten Spannung aufladbare Energiespeicher zur Energieversorgung der Sendeeinrichtung beispielsweise wenigstens einen wartungsfreien Kondensator oder einen Akkumulator, wie beispielsweise einen NiMH, Li-ion oder Li-Polymer-Akkumulator. Um eine Aufladung eines solchen Energiespeichers zu ermöglichen, ist bevorzugt ein Impulsumformer zum Umformen der von der Induktionsspule erzeugten Wechselspannung in eine Gleichspannung für den Energiespeicher vorhanden. Der bei einer schnelleren Drehung des Rotors vorhandene Energieüberschuss wird dann in dem Energiespeicher gespeichert und kann für den Betrieb bei geringerer Drehgeschwindigkeit des Rotors und damit geringerer Energieerzeugung genutzt werden.

Weiterhin kann der induktive Impulsgeber mit einer Signalaufbereitungseinrichtung zum Wandeln des analogen Drehzahlmesssignals in ein Rechtecksignal oder ein codiertes Datensignal zusammen wirken.

Besonders bevorzugt sind dann wenigstens der induktive Impulsgeber, der Energiespeicher, der Impulsumformer, die Signalaufbereitungseinrichtung und die Sendeeinrichtung in einer kombinierten Sensor-Sende-Baueinheit zusammengefasst, welche in unmittelbarer Nachbarschaft zum Rotor angeordnet ist. Zusätzlich kann auch die Signalauswerteeinrichtung in diese Baueinheit integriert sei, welche das von der Signalaufbereitungseinrichtung ausgesteuerte Rechtecksignal auswertet und aus diesem das von einem Steuergerät direkt verarbeitbare Ist-Drehzahlsignal generiert. Falls es jedoch aufgrund einer beispielsweise hohen Temperaturbelastung im Bereich des Rotors erforderlich ist, außer dem induktiven Impulsgeber, welcher stets am Rotor angeordnet sein muss, eines oder mehrere Elemente aus einer solchen Sensor-Sende-Baueinheit auszugliedern, so können diese ausgegliederten Elemente mittels einer Kabelverbindung an den induktiven Impulsgeber gekoppelt werden.

Wenn der induktive Impulsgeber ein Drehzahlsensor zur Messung von Raddrehzahlen im Rahmen eines ABS-/ASR- oder ESP-Systems, von Kurbelwellen- und/oder Nockenwellendrehzahlen und/oder von Drehzahlen einer Einspritzpumpe eines Fahrzeugs ist, dann ist beispielsweise in unmittelbarer Nachbarschaft jedes Fahrzeugrads oder jeder Fahrzeugachse bzw. der Kurbelwelle, der Nockenwelle oder der Einspritzpumpe eine solche kombinierte Sensor-Sende-Baueinheit angeordnet und überträgt das Drehzahlmesssignal des jeweiligen Rotors an eine beispielsweise zentrale Empfangseinrichtung, von welcher die Drehzahlmesssignale dann an für die jeweiligen Funktionen wie ABS, ASR, ESP, Motorsteuerung, Gemischaufbereitung, etc. zuständigen Steuergeräte verteilt bzw. weiter geleitet werden. Alternativ kann jedoch auch für jede kombinierte Sensor-Sende-Baueinheit oder für eine Gruppe von kombinierten Sensor-Sende-Baueinheiten eine eigene Empfangseinrichtung vorgesehen sein. Nicht zuletzt kann auch eine solche Empfangseinrichtung direkt in ein Steuergerät integriert sein, oder es wird eine bereits vorhandene Empfangseinrichtung (z.B. ZV, Keyless Go®, TPMS®) genutzt.

Aufgrund der Energieversorgung durch den induktiven Impulsgeber bzw. den Energiespeicher kann die Sendeeinrichtung ausgebildet sein, dass sie zusätzlich zu dem Drehzahlmesssignal Messsignale weiterer Sensoren wie ein Temperatursignal eines Temperatursensors, ein Verschleißsignal eines Bremsbelagverschleißsensors und/oder ein Drucksignal eines Drucksensors an die Empfangseinrichtung aussendet.

Genaueres geht aus der nachfolgenden Beschreibung eines Ausführungsbeispiels hervor.

### Zeichnung

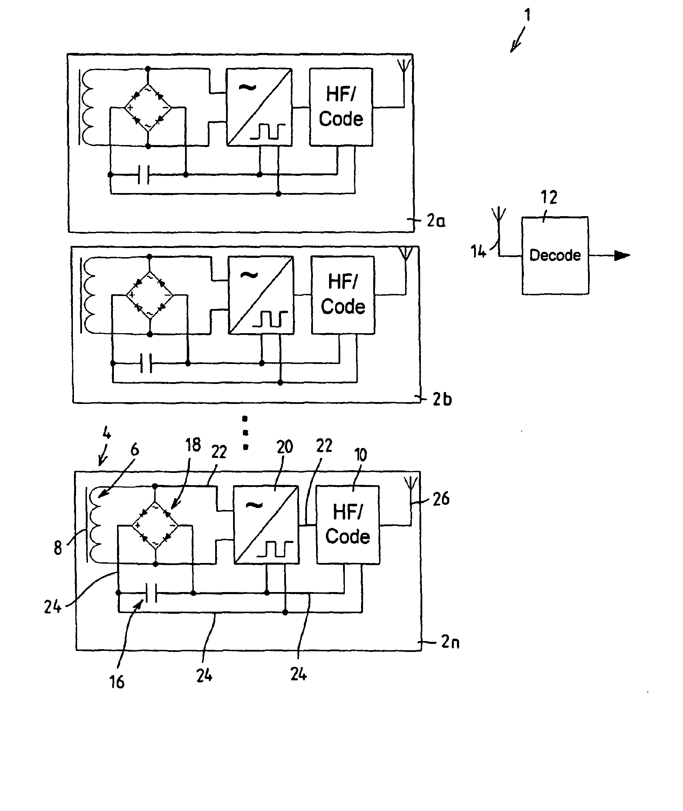

Nachstehend ist ein Ausführungsbeispiel der Erfindung in der Zeichnung dargestellt und in der nachfolgenden Beschreibung näher erläutert. In der Zeichnung zeigt die einzige Figur eine Messvorrichtung zur Messung der relativen Drehgeschwindigkeit eines sich gegenüber einem Stator drehenden Rotors gemäß einer bevorzugten Ausführungsform der Erfindung.

### Beschreibung des Ausführungsbeispiels

In der Figur ist eine Messvorrichtung 1 zur Messung der relativen Drehgeschwindigkeit eines sich gegenüber einem Stator drehenden Rotors gemäß einer bevorzugten Ausführungsform der Erfindung gezeigt. Der Stator besteht dabei aus einer kombinierten Sensor-Sende-Baueinheit, von welchen vorzugsweise mehrere 2a, 2b bis 2n vorhanden sind. Jede der Sensor-Sende-Baueinheiten 2a, 2b bis 2n ist einem Rotor zugeordnet bzw. misst dessen Drehzahl, insbesondere je einem Fahrzeugrad eines Fahrzeugs zur Messung der Raddrehgeschwindigkeit. Exemplarisch für die anderen Sensor-Sende-Baueinheiten 2a, 2b bis 2n-1 wird im folgenden der Aufbau der Sensor-Sende-Baueinheit 2n erläutert, welche unter anderem einen induktiven Impulsgeber 4 beinhaltet.

Der induktive Impulsgeber 4 dient zur inkrementalen Erfassung der relativen Drehgeschwindigkeit vorzugsweise eines Fahrzeugrads im Rahmen eines ABS- (Antiblockiersystem), ASR- (Antriebsschlupfregelung), oder ESP- (Elektronisches Stabilitätssystem) Systems, mit welchem das Fahrzeug vorzugsweise ausgestattet ist. Dabei trägt das Fahrzeugrad beispielsweise einen hier nicht gezeigten Kranz mit einer Anzahl von Umfangsmarkierungen, beispielsweise in Form von Zähnen eines Zahnrads, wobei jeder Zahn eine Spannungsänderung der in einer Induktionsspule 6 des induktiven Impulsgebers 4 induzierten Spannung hervorruft. Aus der Anzahl der je Zeiteinheit abgetasteten Umfangsmarkierungen bzw. aus der Signalfrequenz berechnet dann eine Auswerteelektronik die relative Drehgeschwindigkeit des Fahrzeugrads relativ zu dem induktiven Impulsgeber 4. Dabei kann der Kranz aus magnetisch passivem Material bestehen, wie beispielsweise aus weichmagnetischem Eisen. In diesem Fall ist die Induktionsspule 6 des induktiven Impulsgebers 4 beispielsweise um einen Polstift gewickelt, an dem ein Magnet 8 aus hartmagnetischem Material befestigt ist. Alternativ kann der Kranz auch aus hartmagnetischem Material bestehen, wobei die einzelnen Zähne des Zahnrads eine abwechselnde magnetische Polarität aufweisen. In der Induktionsspule 6 wird dann durch die Drehung des mit Umfangsmarkierungen versehenen und mit dem Fahrzeugrad mitdrehenden Kranzes eine ein Drehzahlmesssignal für die Drehgeschwindigkeit des Fahrzeugrads repräsentierende elektrische Spannung induziert. Die Funktionsweise eines solchen induktiven Impulsgebers 4 ist hinlänglich bekannt, deshalb soll hier nicht weiter darauf eingegangen werden.

Wesentlich ist vielmehr, dass eine von der auf der vom induktiven Impulsgeber 4 induzierten Spannung basierenden elektrischen Energie versorgbare Sendeeinrichtung 10 vorgesehen ist, welche wenigstens das Drehzahlmesssignal oder ein aus diesem abgeleitetes Signal drahtlos an eine Empfangseinrichtung 12 sendet, die hierzu mit einer Antenne 14 versehen ist. Dieses aus dem Drehzahlmesssignal abgeleitete Signal kann beispielsweise das ausgewertete Drehzahlmesssignal sein, falls senderseitig bereits eine Auswerteeinrichtung für das Drehzahlmesssignal vorhanden ist, welche aus diesem die Ist-Drehgeschwindigkeit als fertige Eingangsgröße für beispielsweise wenigstens ein Steuergerät oder für wenigstens ein Druckregelmodul generiert.

Die Empfangseinrichtung 12 ist insbesondere in Achsnähe in einem Druckregelmodul oder ABS-Ventil oder in einem Steuergerät oder in einer an einem Fahrzeugrahmen eines Nutzfahrzeugs angeordneten Komponente wie einer Niveau- oder Drehratensensoreinrichtung integriert bzw. angeordnet oder mit weiteren Systemen kombiniert. Die Empfangseinrichtung 12 decodiert die von der Sendeeinrichtung 10 einer kombinierten Sensor-Sende-Baueinheit 2a, 2b bis 2n oder von den Sendeeinrichtungen 10 mehrerer kombinierter Sensor-Sende-Baueinheiten 2a, 2b bis 2n gesendeten Signale und leitet diese beispielsweise an ein Bremssteuergerät weiter.

Da der induktive Impulsgeber 4 bevorzugt ein Drehzahlsensor zur Messung von Raddrehzahlen im Rahmen eines ABS-/ASR- und/oder ESP-Systems eines Fahrzeugs ist, ist beispielsweise in unmittelbarer Nachbarschaft jedes Fahrzeugrads eine eigene kombinierte Sensor-Sende-Baueinheit 2a, 2b bis 2n angeordnet, im vorliegenden Fall 1 bis n kombinierte Sensor-Sende-Baueinheiten 2a, 2b und 2n für n Fahrzeugräder.

Eine solche kombinierte Sensor-Sende-Baueinheit 2a, 2b bis 2n überträgt das Drehzahlmesssignal für die Drehzahl des jeweiligen Fahrzeugrads an die beispielsweise zentrale Empfangseinrichtung 12, von welcher die Messsignale dann an ein ABS-, ASR- und/oder ESP-Steuergerät bzw. an ein elektropneumatisches Druckregelmodul (DRM), welches rad- oder achsbezogen ist, weitergeleitet werden. Insbesondere kann die Empfangseinrichtung 12 direkt in das Steuergerät oder Druckregelmodul integriert sein.

Besonders bevorzugt beinhaltet eine kombinierte Sensor-Sende-Baueinheit 2a, 2b bis 2n wenigstens einen mittels der induzierten Spannung der Induktionsspule 6 aufladbaren Energiespeicher 16 zur Energieversorgung der Sendeeinrichtung 10. Dieser Energiespeicher 16 wird beispielsweise durch wenigstens einen wartungsfreien Kondensator gebildet. Denkbar ist auch ein Akkumulator, wie beispielsweise ein NiMH, Li-ion oder Li-Polymer-Akkumulator. Um eine Aufladung des Kondensators 16 zu ermöglichen, ist weiterhin bevorzugt ein Impulsumformer 18 zum Umformen der von der Induktionsspule 6 erzeugten Wechselspannung in eine Gleichspannung für den Kondensator 16 in der kombinierten Sensor-Sende-Baueinheit 2a, 2b bis 2n integriert. Weiterhin ist die Induktionsspule 6 an eine Signalaufbereitungseinrichtung 20 zum Wandeln des analogen Messsignals in ein Rechtecksignal angeschlossen, welche an die Sendeeinrichtung 10 weitergeschleift wird, die ein kodiertes Funksignal erzeugt.

Besonders bevorzugt sind dann die Induktionsspule 6 des induktiven Impulsgebers 4, die Signalaufbereitungseinrichtung 20 und die Sendeeinrichtung 10 als durch entsprechende Signalleitungen 22 verbundene Elemente eines Signalteils einer kombinierten Sensor-Sende-Baueinheit 2a, 2b bis 2n sowie der Energiespeicher 16 und der Impulsumformer 18 als durch entsprechende Versorgungsleitungen 24 verbundene Elemente eines Versorgungsteils einer kombinierten Sensor-Sende-Baueinheit 2a, 2b oder 2n in einer kombinierten Sensor-Sende-Baueinheit 2a, 2b oder 2n zusammengefasst, welche in unmittelbarer Nachbarschaft zum Kranz bzw. Fahrzeugrad angeordnet wird. Der Versorgungsteil versorgt dann den Signalteil, genauer die Signalaufbereitungseinrichtung 20 und die Sendeeinrichtung 10 über die Versorgungsleitungen 24 mit elektrischer Energie. Zusätzlich kann auch eine hier nicht gezeigte Signalauswerteeinrichtung in die Sensor-Sende-Baueinheit 2a, 2b bis 2n integriert sein, welche das von der Signalaufbereitungseinrichtung 20 ausgesteuerte Rechtecksignal auswertet und aus diesem ein von einem Steuergerät oder einem Druckregelmodul direkt verarbeitbares Ist-Drehzahlsignal generiert und in die Sendeeinrichtung 10 einspeist. Schließlich weisen die Sensor-Sende-Baueinheiten 2a, 2b bis 2n jeweils eine sich von der Sendeeinrichtung 10 erstreckende Antenne 26 auf.

Gemäß einer bevorzugten Ausführungsform sind die Sendeeinrichtungen 10 einer kombinierten Sensor-Sende-Baueinheit 2a, 2b bis 2n und die Empfangseinrichtung 12 von einem RFID-System mit bevorzugt aktivem Transponder umfasst. Ein solcher aktiver RFID-Transponder ist dann bevorzugt jeweils Bestandteil einer kombinierten Sensor-Sende-Baueinheit 2a, 2b oder 2n und bezieht dann die Energie zur Versorgung des Signalteils aus dem integrierten Energiespeicher 16.

Aufgrund der Energieversorgung durch den induktiven Impulsgeber 4 bzw. den Energiespeicher 16 kann eine solche kombinierte Sensor-Sende-Baueinheit 2a, 2b bis 2n zusätzlich zu dem Drehzahlmesssignal weitere Messsignale fahrzeugradbezogener Sensoren an die Empfangseinrichtung 12 senden, beispielsweise ein Temperatursignal eines Temperatursensors bezüglich der Lagertemperatur der Fahrzeugradlagerung und/oder ein Verschleißsignal eines Bremsbelagverschleißsensors und/oder ein Drucksignal eines Drucksensors einer Reifendruckkontrolle. Die Signale solcher Sensoren werden dann den Sensor-Sende-Baueinheiten 2a, 2b bis 2n beispielsweise durch Kabelverbindungen zugeführt.

Durch eine codierte Datenübertragung von der Sendeeinrichtung 10 zur Empfangseinrichtung 12 kann vermieden werden, dass sich ähnlich aufgebaute Messeinrichtungen verschiedener Hersteller gegenseitig beeinflussen. Schließlich können die kombinierten Sensor-Sende-Baueinheiten 2a, 2b und 2n jeweils gegenüber bei schneller Fahrt auftretenden hohen Induktionsspannungen geschützt werden.

### Bezugszahlentabelle

- 1: Messvorrichtung
- 2: Sensor-Sende-Baueinheit
- 4: induktiver Impulsgeber
- 6: Induktionsspule
- 8: Spulenkern
- 10: Sendeeinrichtung
- 12: Empfangseinrichtung
- 14: Antenne
- 16: Energiespeicher
- 18: Impulsumformer
- 20: Signalaufbereitungseinrichtung
- 22: Signalleitungen
- 24: Versorgungsleitungen
- 26: Antenne

## Patentansprüche

1. Messvorrichtung (1) zur Messung der relativen Drehgeschwindigkeit eines sich gegenüber einem Stator (2) drehenden Rotors, mit wenigstens einem vom Stator (2) getragenen induktiven Impulsgeber (4), der wenigstens eine Induktionsspule (6) umfasst, in welcher durch die Drehung des mit Umfangsmarkierungen versehenen Rotors eine ein Drehzahlmesssignal für die Drehgeschwindigkeit des Rotors repräsentierende elektrische Spannung induzierbar ist, wobei eine von der auf der vom induktiven Impulsgeber (4) induzierten Spannung basierenden elektrischen Energie versorgbare Sendeeinrichtung (10) vorgesehen ist, welche ausgebildet ist, dass sie wenigstens das Drehzahlmesssignal oder ein aus diesem abgeleitetes Signal drahtlos an eine Empfangseinrichtung (12) sendet, **gekennzeichnet durch** ein RFID-System mit aktivem Transponder, welches die Sendeeinrichtung (10) und die Empfangseinrichtung (12) umfasst, wobei ein Energiespeicher (16) des Transponders von der induzierten Spannung der Induktionsspule (6) des induktiven Impulsgebers (4) gespeist wird.

2. Messvorrichtung nach Anspruch 2, **dadurch gekennzeichnet, dass** der Energiespeicher (16) wenigstens einen wartungsfreien Kondensator oder einen Akkumulator beinhaltet.

3. Messvorrichtung nach Anspruch 1 und 2, **dadurch gekennzeichnet, dass** wenigstens ein Impulsumformer (18) zum Umformen der von der Induktionsspule (6) erzeugten Wechselspannung in eine Gleichspannung für den Energiespeicher (16) vorgesehen ist.

4. Messvorrichtung nach einem der vorhergehenden Ansprüche, **dadurch gekennzeichnet, dass** der induktive Impulsgeber (4) eine Signalaufbereitungseinrichtung (20) zum Wandeln des analogen Messsignals in ein Rechtecksignal oder Datensignal aufweist.

5. Messvorrichtung nach einem der vorhergehenden Ansprüche, **dadurch gekennzeichnet, dass** wenigstens der induktive Impulsgeber (4), der Energiespeicher (16), der Impulsumformer (18), die Signalaufbereitungseinrichtung (20) und die Sendeeinrichtung (10) in einer kombinierten Sensor-Sende-Baueinheit (2) zusammengefasst sind, welche in unmittelbarer Nachbarschaft zum Rotor angeordnet ist.

6. Messvorrichtung nach Anspruch 5, **dadurch gekennzeichnet, dass** eine Empfangseinrichtung (12) für wenigstens eine kombinierte Sensor-Sende-Baueinheit (2) vorgesehen ist, von welcher die Messsignale an wenigstens ein Steuergerät und/oder ein Druckregelmodul und/oder ein ABS-Ventil weiterbar sind.

7. Messvorrichtung nach einem der vorhergehenden Ansprüche, **dadurch gekennzeichnet, dass** der induktive Impulsgeber (4) ein Drehzahlsensor zur Messung von Raddrehzahlen im Rahmen eines ABS-/ASR- oder ESP-Systems, von Kurbelwellen- und/oder Nockenwellendrehzahlen und/oder von Drehzahlen einer Einspritzpumpe eines Fahrzeugs ist.

8. Messvorrichtung nach einem der vorhergehenden Ansprüche, **dadurch gekennzeichnet, dass** die Sendeeinrichtung (10) ausgebildet ist, dass sie zusätzlich zu dem Drehzahlmesssignal Messsignale weiterer Sensoren wie ein Temperatursignal eines Temperatursensors, ein Verschleißsignal eines Bremsbelagverschleißsensors und/oder ein Drucksignal eines Drucksensors an die Empfangseinrichtung (12) aussendet.

## Claims

1. Measuring device (1) for measuring the relative rotational speed of a rotor rotating relative to a stator (2), comprising at least one inductive pulse generator (4) supported by said stator (2), which includes at least one induction coil (6) in which an electric voltage may be induced by the rotation of said rotor provided with peripheral markings, which voltage represents a rotational speed measuring signal for the rotational speed of said rotor, with a transmitting means (10) being provided that is adapted to be supplied by the electrical energy based on said voltage induced by said inductive pulse generator, which means is so designed that it transmits at least said rotational speed measuring signal or a signal derived therefrom in a wireless manner to a receiving means (12), **characterised by** an RFID system with an active transponder which encompasses said transmitter means (10) and said receiving means (12), with an energy storage medium (16) of said transponder being supplied by said induced voltage of said induction coil (6) of said inductive pulse generator.

2. Measuring device according to Claim 1, **characterized in that** said energy storage medium (16) includes at least one maintenance-free capacitor or an accumulator.

3. Measuring device according to Claims 1 and 2, **characterized in that** at least one pulse converter (18) is provided for converting the alternating voltage generated by said induction coil (6) into a direct voltage for said energy storage medium (16).

4. Measuring device according to any of the preceding Claims, **characterized in that** said inductive pulse generator (4) includes a signal processing means (20) for converting said analog measuring signal into a rectangular signal or a data signal.

5. Measuring device according to any of the preceding Claims, **characterized in that** at least said inductive pulse generator (4), said energy storage medium (16), said pulse converter (18), said signal processing means (20) and said transmitter means (10) are combined in a single combined sensor transmitter module (2) that is disposed in the immediate vicinity of said rotor.

6. Measuring device according to Claim 5, **characterized in that** said receiving means (12) is provided for at least one combined sensor transmitter module (2) from which said measuring signals may be passed on to at least one controller and/or one print controller module and/or one ABS valve.

7. Measuring device according to any of the preceding Claims, **characterized in that** said inductive pulse generator (4) is a rotational speed sensor for measuring rotational speeds of wheels within the general concept of an ABS/ASR or ESP system, of rotational speeds of a crankshaft or a camshaft and/or of rotational speeds of an injection pump of a vehicle.

8. Measuring device according to any of the preceding Claims, **characterized in that** said transmitter means (10) is so configured that it emits measuring signals from further sensors such as a temperature signal of a thermometric sensor, a wear signal of a brake lining wear sensor and/or a pressure signal of a pressure sensor to said receiving means (12) in addition to said rotational speed measuring signal.

## Revendications

1. Dispositif de mesure (1) à mesurer la vitesse de rotation relative d'un rotor tournant relativement à un stator (2), comprenant au moins un générateur inductif des impulsions (4) appuyé par ledit stator (2), qui renferme au moins une bobine d'inductance (6), dans laquelle on peut induire une tension électrique par la rotation dudit rotor pourvu des marquages périphériques, à cette tension représentant un signal de mesure de la vitesse de rotation pour la vitesse des rotation dudit rotor, à un moyen transmetteur (10) étant dispose, qui est apte à être alimenté en énergie électrique à la base de ladite tension induite par ledit générateur inductive des impulsions, lequel moyen est conçu d'une telle façon, qu'il transmette au moins ledit signal de mesure de vitesse de rotation ou un signal en dérivé sans fil à un moyen récepteur (12), **caractérisé par** un système RFID à un répéteur actif renfermant ledit moyen transmetteur (10) et ledit moyen récepteur (12), à une unité de stockage d'énergie (16) dudit répéteur étant alimentée en ladite tension induite de ladite bobine d'inductance (6) dudit générateur inductif des impulsions.

2. Dispositif de mesure selon la revendication 1, **caractérisé en ce que** ladite unité de stockage d'énergie (16) renferme au moins un condensateur sans entretien ou un accumulateur.

3. Dispositif de mesure selon les revendications 1 et 2, **caractérisé en ce qu'**au moins un convertisseur d'impulsions (18) est prévu à convertir la tension alternative engendrée par ladite bobine d'inductance (6) en une tension continue pour ladite unité de stockage d'énergie (16).

4. Dispositif de mesure selon une quelconque des revendications précédentes, **caractérisé en ce que** ledit générateur inductif des impulsions (4) renferme un moyen de traitement des signaux (20) à convertir ledit signal analogique de mesure en un signal rectangulaire ou en un signal de données.

5. Dispositif de mesure selon une quelconque des revendications précédentes, **caractérisé en ce qu'**au moins ledit générateur inductif des impulsions (4), ladite unité de stockage d'énergie (16), ledit convertisseur des impulsions (18), ledit moyen de traitement des signaux (20) et ledit moyen émetteur (10) sont combinés dans un seul module émetteur combiné à détecteur (2), qui est dispose au voisinage immédiate dudit rotor.

6. Dispositif de mesure selon la revendication 5, **caractérisé en ce que** ledit moyen récepteur (12) est disposé pour au moins un module émetteur combiné à détecteur (2), à partir duquel on peut transmettre lesdits signaux de mesure vers au moins un moyen de commande et/ou un module régulateur de pression et/ou un module de pilote de l'imprimante et/ou une soupape de freinage antiblocage.

7. Dispositif de mesure selon une quelconque des revendications précédentes, **caractérisé en ce que** ledit générateur inductif des impulsions (4) est un détecteur de vitesse de rotation à mesurer des vitesses de rotation des roues dans le cadre général d'un système antiblocage/d'antipatinage ou système électronique de stabilité, des nombre de tours d'un arbre-manivelle ou d'un arbre à cames et/ou des vitesses de rotation d'une pompe d'injection d'un véhicule.

8. Dispositif de mesure selon une quelconque des revendications précédentes, **caractérisé en ce que** ledit moyen émetteur (10) est configure d'une telle façon, qu'il émette des signaux de mesure à partir des autres détecteurs comme un signal de température d'une sonde de température, un signal d'usure d'un détecteur d'usure de la garniture de frein et/ou un signal pression d'un capteur de pression vers ledit moyen récepteur (12) comme complément au signal de mesure de vitesse de rotation.
